# FASCICULE DE BREVET EUROPEEN

(11) **EP 2 353 053 B1**
(45) Date de publication et mention de la délivrance du brevet: **26.12.2012**
(21) Numéro de dépôt: 09759749.6
(22) Date de dépôt: 30.10.2009
(51) Int. Cl.: G05D 1/06

(54) **PROCEDE ET DISPOSITIF D'ATTENUATION DES EFFETS D'UNE TURBULENCE SUR UN AERONEF**
VERFAHREN UND EINRICHTUNG ZUR DÄMPFUNG DER EFFEKTE VON TURBULENZ AN EINEM FLUGZEUG
METHOD AND DEVICE FOR ATTENUATING THE EFFECTS OF TURBULENCE ON AN AIRCRAFT

(30) Priorité: 05.11.2008 FR 0806156
(43) Date de publication de la demande: 10.08.2011
(73) Titulaire: Airbus Operations (Société par actions simplifiée), 31060 Toulouse (FR)
(72) Inventeur: JENARO RABADAN, Guillermo, F-31200 Toulouse (FR); PUIG, Stéphane, F-31650 Lauzerville (FR)
(74) Mandataire: Hartmann, Jean-Luc
(86) Numéro de dépôt international: PCT/FR2009/001261
(87) Numéro de publication internationale: WO 2010/052382

(56) Documents cités:
- FR-A- 2 891 802
- FR-A- 2 912 991
- US-B1- 6 416 017

## Description

La présente invention concerne un procédé et un dispositif d'atténuation des effets d'une turbulence sur un aéronef.

Certains éléments de l'art antérieur ou de l'invention sont décrits ici dans un référentiel spatial lié à l'aéronef, dit référentiel aéronef. Dans toute la description, ce référentiel aéronef est défini de façon usuelle par une direction longitudinale de l'aéronef, une direction transversale de l'aéronef et une troisième direction, orthogonale aux deux autres, qui par convention est appelée direction verticale bien qu'elle ne coïncide pas -du moins en vol- avec la "verticale" d'un référentiel terrestre telle que fournie par la gravité. Lorsqu'un doute est possible quant au référentiel concerné, la "verticale" du référentiel terrestre est appelée direction de la gravité.

Par ailleurs, le terme "vent" désigne le mouvement total de l'air en un point donné, qui résulte de la superposition du mouvement moyen de l'air (écoulement laminaire) et de la turbulence en ce point. La turbulence est une agitation qui est constituée par des mouvements complexes et désordonnés, en continuelle transformation.

La turbulence a des effets néfastes sur l'aéronef. Elle peut notamment induire : des accélérations verticales de l'aéronef susceptibles de déplacer des objets ou passagers dans la cabine ; un changement de niveaux d'altitude, qui peut notamment induire un risque de collision avec un autre aéronef ; un excédent de charges sur la voilure ; d'importants moments de roulis ; une sensation d'inconfort dans la cabine...

Trois types de turbulence sont notamment à l'origine de troubles causés à l'aéronef :
- la turbulence en air clair, qui résulte de cisaillements de vent ; cette turbulence, non convective, apparaît à haute altitude à proximité des courants jets, le plus souvent au droit des montagnes et plutôt en hiver,
- la turbulence convective, qui apparaît à l'intérieur ou au voisinage des nuages ; des turbulences très sévères peuvent survenir dans les nuages d'orage, où coexistent des courants verticaux de sens contraire pouvant atteindre des dizaines de m/s. Ces phénomènes sont locaux et généralement visibles (en raison de la présence des nuages),
- la turbulence de sillage, créée par le passage d'un aéronef ; les vortex générés par un aéronef lourd peuvent induire d'importants moments de roulis sur un aéronef plus léger.

Parce qu'elles augmentent les charges sur la voilure, les turbulences obligent à renforcer la structure de l'aéronef ; elles ont par conséquent un impact sur la masse de ce dernier. De surcroît, les turbulences fatiguent la structure de l'aéronef et peuvent de ce fait limiter sa durée de vie, ou à tout le moins pénaliser sa rentabilité opérationnelle en imposant de fréquents contrôles de la structure et des équipements de l'aéronef. Aussi et surtout, les turbulences sont la première cause de blessures chez les passagers, si on exclut les accidents fatals.

La détection et la mesure des turbulences, ainsi que la mise en oeuvre d'actions palliatives correspondantes, représentent donc des enjeux importants.

Il est connu, afin d'atténuer les effets d'une turbulence sur un aéronef, d'actionner des surfaces mobiles de contrôle de l'aéronef, tels qu'ailerons, volets, spoilers, becs, gouvernes de profondeur, gouverne de direction, élévateurs..., de façon à limiter les variations de charges subies par l'aéronef.

FR 2 891 802 enseigne en outre, pour atténuer les effets d'une turbulence verticale, de calculer un ordre de commande pour une surface mobile de contrôle en fonction, d'une part de la composante verticale de la vitesse du vent à la position courante de l'aéronef, et d'autre part d'un niveau de sévérité de la turbulence verticale survenant à la position courante de l'aéronef, lequel niveau de sévérité est calculé à partir de la composante verticale du vent précitée. En pratique, lorsque l'aéronef est un avion, la composante verticale du vent est mesurée par une sonde anémométrique placée au nez de l'avion, afin de connaître avec un léger temps d'avance le vent que vont subir les ailes de l'avion. Toutefois, même dans les avions les plus grands, ce temps d'avance reste inférieur à 100ms. Compte tenu de la vitesse de sortie des actionneurs connus, il n'est donc pas possible d'obtenir un braquage total des surfaces de contrôle situées sur les ailes.

Pour pallier cet inconvénient, il est également connu d'utiliser des lidars (acronyme de "*Light Detection And Ranging*", qui signifie détection par ondes lumineuses et télémétrie) pour mesurer des vitesses de vent à l'avant de l'aéronef à une distance donnée de celui-ci, en vue de détecter les turbulences survenant à cette distance. Un lidar est un capteur actif comprenant un laser émettant un faisceau lumineux incident dirigé, un télescope qui recueille l'onde rétrodiffusée par les particules rencontrées par le faisceau incident, et des moyens de traitement. L'onde rétrodiffusée recueillie à l'instant t=2d/c (où "c" désigne la vitesse de la lumière) après émission d'un faisceau incident correspond à l'onde rétrodiffusée par la couche atmosphérique située à la distance "d" du lidar, dite distance de visée. Selon l'effet Doppler, la vitesse de déplacement de ladite couche atmosphérique selon la direction de visée du lidar est déduite de la différence entre la fréquence du faisceau incident et celle de l'onde rétrodiffusée. La mesure du vent à une distance donnée à l'avant de l'aéronef permet d'évaluer les phénomènes qui vont toucher l'aéronef avec un temps d'avance supérieur à 100ms, et offre donc la possibilité de braquer totalement une surface de contrôle si nécessaire.

Toutefois, les dispositifs et procédés connus mis en oeuvre pour atténuer les effets d'une turbulence ne donnent pas pleinement satisfaction.

La présente invention vise à proposer un procédé et un dispositif permettant d'atténuer les effets d'une turbulence sur un aéronef de façon plus efficace que les procédés et dispositifs antérieurs connus.

L'invention vise ainsi à limiter plus encore les variations de charges subies par l'aéronef, à renforcer la sécurité et, le cas échéant, à améliorer le confort des passagers.

Pour ce faire, l'invention concerne un procédé d'atténuation des effets d'une turbulence sur un aéronef, caractérisé en ce qu'il comprend les étapes suivantes :
- on utilise au moins un signal, dit signal de profil du vent selon une direction dite direction d'excitation, représentant à un instant donné dans un référentiel aéronef la composante, selon ladite direction d'excitation, de la vitesse du vent à l'avant de l'aéronef en fonction de la distance "x" selon une direction longitudinale de l'aéronef,
- on exécute une étape, dite étape de détermination de fréquences, dans laquelle on traite ce signal de profil du vent de façon à en déterminer un contenu fréquentiel,
- on sélectionne une stratégie de contrôle à adopter en fonction du contenu fréquentiel précédemment déterminé, laquelle stratégie permet d'identifier une ou plusieurs lois de commande applicables.

Avantageusement, on détermine ensuite une loi de commande à appliquer pour commander des surfaces mobiles de contrôle de l'aéronef, en fonction notamment de la stratégie de contrôle précédemment sélectionnée.

Pour la première fois, l'invention permet donc, d'une part d'estimer les fréquences auxquelles l'aéronef est susceptible d'être excité au fur et à mesure de son déplacement, et d'autre part d'adapter à ces fréquences les actions palliatives mises en oeuvre, c'est-à-dire de choisir en conséquence une stratégie de contrôle qui permettra ensuite de cibler les surfaces mobiles de contrôle à actionner et les paramètres d'actionnement correspondants.

En effet, la fréquence, à une distance x donnée, d'un signal de profil du vent selon l'invention est représentative de la fréquence à laquelle l'aéronef sera excité selon la direction d'excitation (dudit profil) lorsqu'il parviendra à l'endroit de l'atmosphère correspondant à cette distance x donnée. Un tel signal de profil du vent permet donc de savoir, par exemple, si l'aéronef est susceptible d'être excité selon un mode propre de sa structure. En pratique, l'étape de détermination de fréquences selon l'invention est donc de préférence orientée en fonction des fréquences que l'on souhaite déceler (c'est-à-dire en fonction d'un ou de plusieurs modes propres de l'aéronef).

Un signal de profil du vent tel qu'utilisé selon l'invention peut être construit comme suit :
- on mesure de façon itérative, à l'aide d'un lidar, des vitesses de vent en une pluralité de couples de points de mesure situés à différentes distances, dites distances de mesure, du nez de l'aéronef. Comme précédemment expliqué, un lidar permet de mesurer, en un point de mesure donné, la vitesse du vent selon la direction de visée du lidar en ce point. La différence vectorielle entre les vecteurs vitesses obtenus pour deux points de mesure -formant un couple de points de mesure- peut être assimilée à la composante, selon la direction reliant lesdits points de mesure, de la vitesse du vent en un point de l'atmosphère situé (au moment de la mesure) entre ces deux points de mesure. Un lidar tel que défini ci-dessus permet donc de calculer des composantes de vitesse du vent à différentes distances de l'aéronef ;
- on construit un signal de profil du vent selon une direction d'excitation à partir d'une pluralité de mesures comprenant la dernière ou éventuellement l'avant-dernière mesure effectuée à chacune des distances de mesure pour au moins un couple de points de mesure alignés selon la direction d'excitation. Un tel signal peut par exemple être construit par interpolation.

A noter que le nombre de couples de points de mesure pris en compte pour la construction d'un signal de profil du vent peut éventuellement varier d'un signal à un autre (comme expliqué plus loin).

De préférence, on construit au moins un signal de profil du vent selon la direction verticale dans un plan longitudinal vertical médian (plan de symétrie) de l'aéronef, ledit signal représentant à un instant donné la composante verticale de la vitesse du vent dans ce plan médian à l'avant de l'aéronef. Celui-ci est établi à partir de mesures de vitesse de vent en un couple de points de mesure appartenant audit plan médian à chaque distance de mesure pour laquelle un tel couple est acquis.

De préférence, chaque distance de mesure peut être préalablement définie non seulement en unité de longueur, par exemple en mètre ou en pied, mais aussi en unité de temps, de préférence en seconde. A cette fin sont prévus des moyens de calcul aptes à calculer la distance (exprimée en unité de longueur) entre le lidar et chaque point de mesure, à partir de la distance de mesure exprimée en temps et de données représentatives de la vitesse de vol de l'aéronef, fournies en temps réel par une unité de traitement de l'aéronef. Ces moyens de calcul peuvent être intégrés dans ladite unité de traitement de l'aéronef ou dans une unité de traitement propre au lidar.

Avantageusement, on mesure des vitesses de vent jusqu'à des distances de mesure atteignant 4 secondes ou 800 mètres, ou même 5 secondes ou 1000 mètres, voire éventuellement 7 secondes ou 1400 mètres. En pratique, la distance de mesure maximale est choisie en fonction de la plus petite fréquence que l'on souhaite déceler.

Avantageusement, l'étape de mesure de vitesses de vent peut de plus présenter l'une ou plusieurs des caractéristiques suivantes :
- on mesure des vitesses de vent en au moins six points de mesure à chaque distance de mesure, lesquels points forment -à chaque distance de mesure- trois couples, dits couples verticaux, de points de mesure alignés selon la direction verticale ; avantageusement, ces points de mesure forment également au moins un couple, dit couple transversal, de points de mesure alignés selon la direction transversale. De préférence, à chaque distance de mesure ou à certaines d'entre elles seulement, on mesure des vitesses de vent en au moins dix points de mesure formant cinq couples verticaux de points de mesure ;
- on mesure des vitesses de vent à au moins une distance de mesure proche de l'aéronef, par exemple inférieure à 250ms ou à 50m et de préférence inférieure à 150ms ou à 30m, afin d'offrir un dispositif alternatif à l'anémomètre de l'aéronef ;
- on mesure des vitesses de vent à des distances de mesure de plus en plus rapprochées les unes des autres en direction de l'aéronef. En d'autres termes, si "x" désigne la distance de mesure et "Δx" désigne la distance entre deux distances de mesure successives, Δx croît avantageusement avec x.

Avantageusement, dans l'étape de détermination de fréquences selon l'invention, on traite un signal de profil du vent de façon à déterminer si celui-ci ou une partie de celui-ci comporte au moins une fréquence comprise dans au moins une plage de fréquences prédéfinie. De préférence :
- on traite le signal de profil du vent de façon à déterminer si celui-ci ou une partie de celui-ci comporte au moins une fréquence proche d'un mode propre rigide de l'aéronef. Par exemple, dans le cas d'un signal de profil du vent selon la direction verticale, on traite avantageusement ledit signal de façon à déterminer si celui-ci ou une partie de celui-ci comporte au moins une fréquence proche d'un mode propre de l'aéronef connu sous le nom de fréquence d'oscillation d'incidence ; on traite ainsi avantageusement le signal de profil du vent de façon à déterminer si celui-ci comporte au moins une fréquence inférieure à 0,5Hz (la fréquence d'oscillation d'incidence d'un aéronef étant généralement de l'ordre de 0,2Hz à 0,4Hz) ;
- en variante ou de préférence en combinaison, on traite le signal de profil du vent de façon à déterminer si celui-ci ou une partie de celui-ci comporte au moins une fréquence proche d'un mode propre souple de l'aéronef et notamment de sa voilure (ailes mais aussi empennages vertical et horizontal) ou de son fuselage. Par exemple, dans le cas d'un signal de profil du vent selon la direction verticale et afin d'évaluer les risques encourus par les ailes de l'aéronef, on traite ledit signal de façon à déterminer si une partie de celui-ci correspondant à la plage de distances [0 ; 400m] ou [0 ; 2s] comporte au moins une fréquence supérieure à 0,5Hz, ou (selon l'aéronef) si une partie de celui-ci correspondant à la plage de distances [0 ; 200m] ou [0; 1 s] -ou en variante [200m ; 400m] ou [1 s ; 2s]- comporte au moins une fréquence supérieure ou égale à 1Hz. De façon analogue et afin d'évaluer les risques encourus par le fuselage, on peut également traiter le signal de profil du vent selon la direction verticale de façon à déterminer si une partie de celui-ci correspondant à la plage de distances [0 ; 200m] ou [0 ; 1s] -voire [0 ; 100m] ou [0 ; 0,5s] ou de préférence [100 m ; 200m] ou [0,5s ; 1s]- comporte au moins une fréquence supérieure ou égale à 2,5Hz (voire supérieure ou égale à 3Hz, selon l'aéronef) ;
- le cas échéant, on traite le signal de profil du vent de façon à déterminer de plus si celui-ci ou une partie de celui-ci comporte au moins une fréquence comprise entre 0,5 et 1Hz.

L'étape de détermination de fréquences selon l'invention peut être réalisée de diverses façons.

Selon un premier mode de réalisation, on traite le signal de profil du vent à l'aide d'au moins un filtre passe-bas et au moins un filtre passe-haut. Le filtre passe-bas permet d'atténuer voire éliminer les fréquences hautes et donc de déceler les fréquences basses; le filtre passe-haut permet à l'inverse de déceler les fréquences hautes. Lesdits filtres sont choisis en fonction des plages de fréquences recherchées. On utilise par exemple avantageusement, d'une part un filtre passe-bas dont la fréquence de coupure (fréquence au-dessus de laquelle les fréquences sont atténuées ou éliminées) est sensiblement égale à 0,5Hz, et d'autre part un filtre passe-haut dont la fréquence de coupure (fréquence en dessous de laquelle les fréquences sont atténuées ou éliminées) est sensiblement égale à 0,5Hz ou à 1Hz. Le cas échéant, on utilise également un filtre passe-haut dont la fréquence de coupure est sensiblement égale à 2,5Hz.

Selon un deuxième mode de réalisation, on évalue une période moyenne du signal de profil du vent sur la partie de signal à traiter (c'est-à-dire sur l'intervalle [0 ; 400m] ou [0 ; 2s] ou l'intervalle [0 ; 200m] ou [0 ; 1s] ou les autres intervalles susmentionnés ou la totalité du signal, selon la plage de fréquences recherchée), en fonction du nombre de passages dudit signal par la valeur zéro sur cette partie. L'inverse de cette période moyenne ainsi évaluée fournit une fréquence moyenne du signal sur la partie traitée.

Selon un troisième mode de réalisation, on estime un écart type moyen du signal de profil du vent sur la partie de signal à traiter, à partir de l'amplitude maximale du signal sur cette partie et d'un coefficient constant prédéterminé de façon empirique et statistique, lequel coefficient représente le rapport moyen entre l'écart type et l'amplitude maximale d'un signal de profil du vent. Puis on compare l'écart type ainsi estimé à une plage d'écarts types correspondant à la plage de fréquences recherchée, laquelle plage d'écarts types est préalablement déterminée par intégration d'une partie d'un spectre de Von Karman ou de Kolmogorov qui représente une densité d'énergie en fonction de la fréquence spatiale et est préétabli de façon empirique et statistique.

Avantageusement, dans l'étape de sélection de la stratégie de contrôle :
- si le contenu fréquentiel déterminé comporte majoritairement des fréquences proches d'un mode propre rigide de l'aéronef tel que sa fréquence d'oscillation d'incidence, c'est-à-dire par exemple des fréquences inférieures ou égales à 0,5Hz, on sélectionne une stratégie de contrôle, dite stratégie de confort, visant à améliorer le confort des personnes dans l'aéronef,
- si le contenu fréquentiel déterminé comporte majoritairement des fréquences proches d'un mode propre souple de l'aéronef, c'est-à-dire par exemple des fréquences supérieures à 0,5Hz, à 1Hz ou à 2,5Hz, on sélectionne une stratégie de contrôle, dite stratégie de préservation structurelle, visant à préserver la structure de l'aéronef,
- si le contenu fréquentiel déterminé comporte à la fois des fréquences proches d'un mode propre rigide de l'aéronef et des fréquences proches d'un mode propre souple de celui-ci, en proportions sensiblement équivalentes, on sélectionne une stratégie de contrôle, dite stratégie mixte, visant à la fois à améliorer le confort des personnes et à préserver la structure de l'aéronef.

Avantageusement, la sélection de la stratégie de confort conduit à l'application de lois de commande commandant l'activation de surfaces mobiles de contrôle choisies parmi : gouvernes de profondeur, gouvernes de direction, élévateurs, et éventuellement flaperons, spoilers et ailerons.

La sélection de la stratégie de préservation structurelle conduit de préférence à l'application de lois de commande commandant l'activation de surfaces mobiles de contrôle choisies parmi : ailerons, spoilers, volets, becs, voire éventuellement gouvernes de profondeur et gouvernes de direction.

La sélection de la stratégie mixte conduit à l'application de lois de commande commandant l'activation de surfaces mobiles choisies parmi l'ensemble des surfaces mobiles de contrôle de l'aéronef.

L'invention prévoit également la possibilité d'utiliser, à titre de surfaces mobiles de contrôle, des surfaces de la voilure (ailes et/ou queue) de l'aéronef conçues de façon à pouvoir être déformées, en d'autres termes des surfaces dont la géométrie peut être modifiée par déformation (et non simplement par articulation).

La sélection d'une stratégie de contrôle permet ainsi d'identifier une ou plusieurs lois de commande applicables. Dans une version de l'invention, la loi de commande à appliquer découle directement de la stratégie de contrôle sélectionnée et éventuellement du contenu fréquentiel du signal de profil du vent.

Dans une variante préférée, la loi de commande à appliquer est choisie parmi les lois de commande applicables (qui découlent de la stratégie de contrôle sélectionnée) en fonction d'un ou de plusieurs maxima d'amplitude que présente le signal de profil du vent. Si le contenu fréquentiel dudit signal comprend majoritairement des "hautes" fréquences (modes propres souples de l'aéronef, stratégie de préservation structurelle), la loi de commande applicable est choisie en fonction du maximum (ou éventuellement de plusieurs maxima) d'amplitude enregistré sur la plage de distances [0 ; 200m] ou [0 ; 1s] ou sur la plage de distances [0 ; 400m] ou [0 ; 2s] (c'est-à-dire sur la partie de signal traitée pour la recherche desdites hautes fréquences). Si le contenu fréquentiel du signal comprend majoritairement des "basses" fréquences (modes propres rigides de l'aéronef, stratégie de confort), la loi de commande applicable est par exemple choisie en fonction du maximum (ou éventuellement de plusieurs maxima) d'amplitude enregistré sur l'ensemble du signal de profil du vent.

Chaque loi de commande définit de façon usuelle, d'une part au moins une surface mobile de contrôle à actionner, et d'autre part des paramètres d'actionnement correspondants, tels que l'angle de braquage (ou le cas échéant l'amplitude de la déformation), la vitesse de braquage et l'instant de début de braquage de ladite surface mobile de contrôle. Avantageusement, ces paramètres d'actionnement sont calculés en tenant compte, notamment, du déphasage pouvant exister entre l'actionnement de la surface mobile de contrôle et la réponse correspondante de l'aéronef, et de façon à ce que les effets du vent et la réponse de l'aéronef à l'actionnement de la surface mobile de contrôle soient en phase. Ainsi, les paramètres d'actionnement de la surface mobile de contrôle sont avantageusement calculés en temps réel (à l'instant t), à partir du signal de profil du vent courant (signal établi ou encore valable à cet instant t), en fonction de l'amplitude courante dudit signal correspondant à une distance xᵣ ou à un instant tᵣ prédéfini dépendant de la surface mobile de contrôle, cette distance xᵣ ou cet instant tᵣ correspondant au déphasage pouvant exister entre l'actionnement de ladite surface mobile de contrôle et la réponse de l'aéronef.

La présente invention concerne également un dispositif apte à mettre en oeuvre le procédé selon l'invention. En particulier, l'invention concerne un dispositif d'atténuation des effets d'une turbulence sur un aéronef, caractérisé en ce qu'il comprend :
- des moyens de détermination de fréquences, adaptés pour traiter un signal de profil du vent tel que précédemment défini, de façon à en déterminer un contenu fréquentiel,
- des moyens de sélection d'une stratégie de contrôle à adopter en fonction du contenu fréquentiel précédemment déterminé, laquelle stratégie permet d'identifier une ou plusieurs lois de commande applicables.

Le dispositif selon l'invention comprend de plus avantageusement des moyens de détermination d'une loi de commande à appliquer pour commander des surfaces mobiles de contrôle de l'aéronef, en fonction de la stratégie de contrôle précédemment sélectionnée et éventuellement d'un ou de plusieurs maxima d'amplitude que présente le signal de profil du vent. Les moyens de détermination sont également aptes à déterminer entièrement la loi de commande à appliquer (c'est-à-dire à calculer les paramètres d'actionnement correspondants) en tenant compte, notamment, du déphasage pouvant exister entre l'actionnement de chaque surface mobile de contrôle concernée par ladite loi de commande et la réponse correspondante de l'aéronef.

La présente invention s'étend à un aéronef comprenant un dispositif d'atténuation des effets d'une turbulence selon l'invention.

D'autres détails et avantages de la présente invention apparaîtront à la lecture de la description suivante, qui se réfère aux dessins schématiques annexés et porte sur un mode de réalisation préférentiel, fourni à titre d'exemple non limitatif. Sur ces dessins :
- la figure 1 est une vue schématique en perspective d'un aéronef et de l'environnement à l'avant de celui-ci, sur laquelle sont matérialisés des points de mesure visés par un lidar permettant de construire un signal de profil du vent tel qu'utilisé selon l'invention,
- la figure 2 est un diagramme représentant un tel signal de profil du vent,

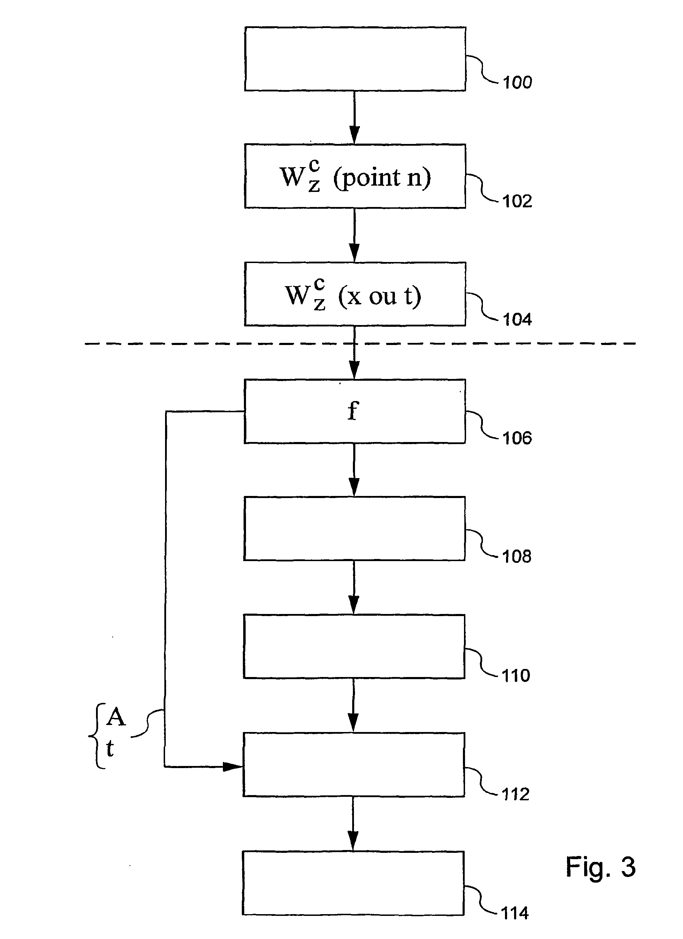

- la figure 3 est un organigramme représentant un procédé d'atténuation selon l'invention.

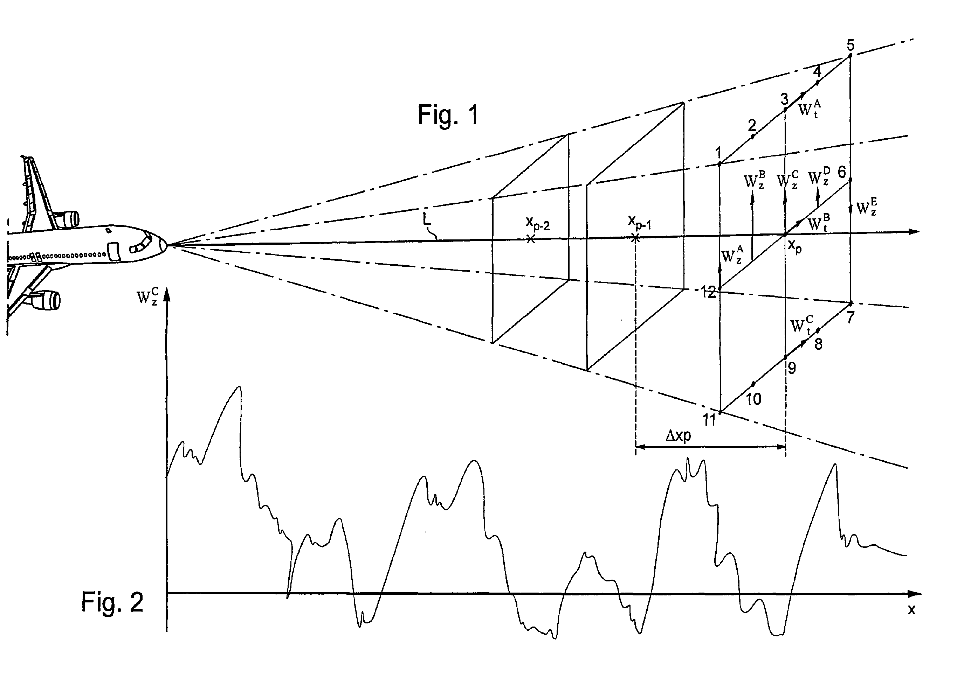

L'aéronef illustré sur la figure 1 est équipé d'un dispositif d'atténuation des effets d'une turbulence selon l'invention.

Ce dispositif d'atténuation est connecté à un lidar adapté pour mesurer des vitesses de vent en une pluralité de couples de points de mesure situés à différentes distances, dites distances de mesure, du nez de l'aéronef. En variante, le dispositif d'atténuation selon l'invention incorpore un tel lidar. Avantageusement, un seul et unique lidar est utilisé pour ces mesures, de façon à limiter le poids et le volume embarqués dans l'aéronef. De façon usuelle, ce lidar comprend un laser apte à émettre des impulsions lumineuses incidentes dirigées, séparées ou groupées par paquets, et un télescope qui recueille l'onde rétrodiffusée par les particules rencontrées par les impulsions lumineuses incidentes.

Le dispositif d'atténuation selon l'invention comprend également des moyens de traitement informatiques (logiciels et matériels) à microprocesseur(s), aptes à réaliser des moyens de détermination de fréquences, des moyens de sélection d'une stratégie de contrôle à adopter, et des moyens de détermination d'une loi de commande à appliquer, tels que définis plus loin. Ces moyens de traitement sont connectés à une unité de traitement du lidar. En variante, ils incorporent tout ou partie des moyens informatiques utiles à la réalisation des mesures de vitesse de vent précédemment définies. Par ailleurs, ces moyens de traitement peuvent être implantés en un seul endroit de l'aéronef (par exemple un boîtier incorporant le lidar) ou être éclatés en plusieurs endroits (et/ou en plusieurs unités à microprocesseur(s)).

Le lidar est avantageusement adapté pour recueillir, à chaque impulsion lumineuse incidente ou à chaque paquet d'impulsions groupées émis par le laser, l'onde rétrodiffusée à différents temps tₙ à compter de l'émission de l'impulsion lumineuse incidente, chaque temps tₙ correspondant à une distance de mesure xₙ selon la relation tₙ = 2xₙ/c (où c désigne la vitesse de la lumière). De préférence, la distance Δx entre deux distances de mesure consécutives augmente avec x, par exemple de façon exponentielle. Le laser du lidar possède de préférence une longueur d'ondes située dans l'ultraviolet, qui offre une bonne résolution. Il dispose par ailleurs d'une puissance adaptée pour permettre de mesurer des vitesses de vent à une distance de mesure maximale comprise entre 500m et 1500m, par exemple de l'ordre de 1000m ou 5s. Il peut toutefois disposer d'une puissance inférieure et délivrer dans ce cas des impulsions lumineuses incidentes groupées par paquets, afin de compenser une puissance a priori insuffisante (pour les grandes distances de mesure).

Le lidar comprend de plus des moyens d'ajustement de sa direction de visée, permettant de modifier la direction de visée entre deux impulsions lumineuses incidentes émises (ou entre deux paquets). En l'exemple illustré, le lidar est programmé de façon à émettre des impulsions lumineuses incidentes selon douze directions de visée. En d'autres termes, au moins pour certaines distances de mesure xₙ, le lidar est apte à mesurer des vitesses de vent en douze points de mesure 1 à 12.

Les points de mesure situés à la même distance de mesure appartiennent à une même sphère centrée sur le lidar dans le référentiel aéronef. Par approximation, ils sont représentés sur la figure 1 comme appartenant à un même plan, dit plan de mesure, orthogonal à la direction longitudinale L de l'aéronef et situé à une distance du nez de l'aéronef égale à la distance de mesure. Par souci de clarté, seuls trois plans de mesure, situés aux distances de mesure xₚ₋₂, xₚ₋₁ et xₚ, ont été représentés sur la figure 1 ; ils ont été de surcroît volontairement écartés les uns des autres pour une plus grande lisibilité.

Dans le plan de mesure illustré situé à la distance de mesure xₚ :
- les points de mesure 1 et 11 forment un couple vertical de points de mesure fournissant, par différence vectorielle des vitesses mesurées en ces points, une évaluation de la composante verticale W_{z}^{A} de la vitesse du vent en un endroit de l'atmosphère situé en regard -selon la direction longitudinale- d'une portion centrale ou distale (c'est-à-dire proche du bout) de l'aile tribord de l'aéronef,
- les points de mesure 2 et 10 forment un couple vertical de points de mesure fournissant, par différence vectorielle, une évaluation de la composante verticale W_{z}^{B} de la vitesse du vent en un endroit de l'atmosphère situé en regard -selon la direction longitudinale- d'une portion proximale (c'est-à-dire proche de l'emplanture) ou centrale de l'aile tribord de l'aéronef,

- les points de mesure 3 et 9 forment un couple vertical de points de mesure fournissant, par différence vectorielle, une évaluation de la composante verticale W_{z}^{C} de la vitesse du vent en un endroit de l'atmosphère situé sur un axe longitudinal central de l'aéronef, c'est-à-dire en regard -selon la direction longitudinale- du nez et du fuselage de l'aéronef,
- les points de mesure 4 et 8 forment un couple vertical de points de mesure fournissant, par différence vectorielle, une évaluation de la composante verticale W_{z}^{D} de la vitesse du vent en un endroit de l'atmosphère situé en regard -selon la direction longitudinale- d'une portion proximale (c'est-à-dire proche de l'emplanture) ou centrale de l'aile bâbord de l'aéronef,
- les points de mesure 5 et 7 forment un couple vertical de points de mesure fournissant, par différence vectorielle, une évaluation de la composante verticale W_{z}^{E} de la vitesse du vent en un endroit de l'atmosphère situé en regard -selon la direction longitudinale- d'une portion centrale ou distale (c'est-à-dire proche du bout) de l'aile bâbord de l'aéronef,
- les points de mesure 1 et 5, ou les points de mesure 2 et 4, forment un couple transversal de points de mesure fournissant, par différence vectorielle, une évaluation de la composante transversale Wₜ^{A} de la vitesse du vent en un endroit de l'atmosphère situé dans un plan longitudinal vertical médian (plan de symétrie) de l'aéronef, au-dessus de l'axe longitudinal central de l'aéronef,
- les points de mesure 6 et 12 forment un couple transversal de points de mesure fournissant, par différence vectorielle, une évaluation de la composante transversale Wₜ^{B} de la vitesse du vent en un endroit de l'atmosphère situé sur l'axe longitudinal central de l'aéronef, c'est-à-dire en regard du nez et du fuselage de l'aéronef,
- les points de mesure 11 et 7, ou les points de mesure 10 et 8, forment un couple transversal de points de mesure fournissant, par différence vectorielle, une évaluation de la composante transversale Wₜ^{C} de la vitesse du vent en un endroit de l'atmosphère situé dans le plan longitudinal vertical médian de l'aéronef, au-dessous de l'axe longitudinal central de l'aéronef.

Les points de mesure 1 des différents plans de mesure sont alignés selon une première direction de visée du lidar; ils forment une première série de points de mesure. De même, les points de mesure 2 des différents plans de mesure sont alignés selon une deuxième direction de visée du lidar et forment une deuxième série de points de mesure, et ainsi de suite. De préférence, chaque série de points de mesure comprend au moins quatre points de mesure répartis sur la plage de distances [0 ; 200m] ou [0 ; 1s] et au moins trois autres points de mesure répartis sur la plage de distances [200m ; 1000m] ou [1 s ; 5s]. Le nombre de points de mesure par série et leur répartition peut varier d'une série à une autre. Par exemple, les séries de points de mesure 3 et 9, qui fournissent des évaluations de la composante verticale W_{z}^{C} de la vitesse du vent en regard du fuselage de l'aéronef, comprennent avantageusement un nombre de points de mesure relativement élevé, dont au moins huit (et de préférence au moins 16) points de mesure répartis sur la plage de distances [0 ; 200m] ou [0 ; 1s] et au moins six (et de préférence au moins douze) autres points de mesure répartis sur la plage de distances [200m ; 1000m] ou [1 s ; 5s]. En revanche, les séries de points de mesure 2, 10, 4 et 8 par exemple peuvent comprendre un nombre de points de mesure inférieur, notamment dans la plage de distances [200m ; 1000m] ou [1s ; 5s].

Le lidar fonctionne de préférence comme suit. Une première étape 100 consiste à acquérir des mesures de vitesse de vent. Une première impulsion lumineuse est émise selon la première direction de visée passant par les points de mesure 1 ; cette impulsion permet d'acquérir la fréquence de l'onde rétrodiffusée au point de mesure 1 pour chaque distance de mesure (de la série), et de mesurer ainsi la vitesse du vent selon la première direction de visée en chaque point de mesure 1. Les moyens d'ajustement sont ensuite actionnés pour modifier la direction de visée du lidar, de façon à ce que celui-ci pointe sur les points de mesure 2. Une deuxième impulsion lumineuse est alors émise selon la deuxième direction de visée (passant par les points de mesure 2) ; cette impulsion permet d'acquérir la fréquence de l'onde rétrodiffusée pour la série des points de mesure 2, et de mesurer ainsi la vitesse du vent selon la deuxième direction de visée pour chacun desdits points de mesure 2. Les moyens d'ajustement sont alors actionnés pour modifier la direction de visée du lidar, de façon à ce que celui-ci pointe sur les points de mesure 3, puis une troisième impulsion lumineuse est émise selon cette nouvelle -troisième- direction de visée, et ainsi de suite pour toutes les directions de visée.

L'acquisition de mesures pour les douze séries de points de mesure constitue un cycle de mesure, qui est répété indéfiniment de façon itérative. A titre d'exemple, le lidar est avantageusement adapté pour réaliser un cycle de mesure complet en moins de 60ms.

Durant et pour chaque cycle de mesure, l'unité de traitement du lidar ou éventuellement les moyens de traitement du dispositif d'atténuation calculent par différence vectorielle, à l'étape 102, la composante verticale W_{z}^{A} de la vitesse du vent dans chaque plan de mesure à partir des vitesses mesurées pour les points de mesure 1 et 11 dudit plan de mesure. Sont calculées de façon analogue la composante verticale W_{z}^{B} de la vitesse du vent dans chaque plan de mesure à partir des vitesses mesurées pour les points de mesure 2 et 10 dudit plan de mesure, et ainsi de suite pour l'ensemble des composantes verticales W_{z}^{C} à W_{z}^{E}. L'unité de traitement du lidar ou éventuellement les moyens de traitement du dispositif d'atténuation calculent également, par différence vectorielle, la composante transversale Wₜ^{A} de la vitesse du vent dans chaque plan de mesure à partir des vitesses mesurées pour les points de mesure 1 et 5 (ou 2 et 4) dudit plan de mesure, de même que la composante transversale Wₜ^{B} -respectivement Wₜ^{C} -de la vitesse du vent dans chaque plan de mesure à partir des vitesses mesurées pour les points de mesure 12 et 6 -respectivement 11 et 7 (ou 10 et 8)-dudit plan de mesure.

En variante ou en combinaison, l'unité de traitement du lidar ou les moyens de traitement du dispositif d'atténuation peuvent éventuellement calculer des composantes de vitesse du vent à partir de vitesses mesurées pour des cycles de mesure différents (successifs ou non) et/ou pour des points de mesure situés à des distances de mesure différentes (consécutives ou non), et ce afin de tenir compte de la distance parcourue par l'aéronef dans le référentiel terrestre au cours d'un cycle de mesure. Par exemple, l'unité de traitement du lidar ou les moyens de traitement du dispositif d'atténuation peuvent être programmés pour calculer la composante verticale W_{z}^{A} de la vitesse du vent à une distance xᵢ pour le cycle j à partir, d'une part de la vitesse mesurée pour le point de mesure 11 à la distance xᵢ pour le cycle j-1, et d'autre part de la vitesse mesurée pour le point de mesure 1 à la distance xᵢ pour le cycle j (sous réserve que le sens de "rotation" du cycle de mesure soit celui décrit plus haut). Selon un autre exemple, notamment dans le cas où la vitesse de l'aéronef est importante et est par exemple supérieure à une valeur seuil prédéfinie, l'unité de traitement du lidar ou les moyens de traitement du dispositif d'atténuation peuvent être programmés pour calculer la composante verticale W_{z}^{C} de la vitesse du vent à une distance xᵢ pour le cycle j à partir, d'une part de la vitesse mesurée pour le point de mesure 3 à la distance xᵢ₊₁ pour le cycle j-1, et d'autre part de la vitesse mesurée pour le point de mesure 9 à la distance xᵢ pour le cycle j.

Certaines ou la totalité des composantes verticales W_{z}^{A} à W_{z}^{E} et transversales Wₜ^{A} à Wₜ^{C} ainsi calculées sont utilisées, par l'unité de traitement du lidar ou par les moyens de traitement du dispositif d'atténuation, pour construire un ou plusieurs signaux de profil du vent. Chaque signal de profil du vent représente à un instant donné la composante selon une direction d'excitation (verticale ou transversale) de la vitesse du vent à l'avant de l'aéronef en fonction de la distance X.

Par exemple, l'ensemble des composantes W_{z}^{C} calculées pour les différentes distances de mesure et pour un même cycle de mesure est utilisé, à l'étape 104, pour construire un signal de profil du vent selon la direction verticale dans le plan médian de l'aéronef. La figure 2 illustre ce signal qui, en l'exemple, est un signal continu (qui peut cependant être par paliers) obtenu par interpolation à partir des composantes W_{z}^{C} calculées. Ce signal permet de prédire les excitations en tangage de l'aéronef.

De façon analogue, l'ensemble des composantes W_{z}^{B} calculées pour les différentes distances de mesure et pour un même cycle de mesure peut être utilisé pour construire un signal de profil du vent selon la direction verticale dans un plan tribord de l'aéronef. L'ensemble des composantes W_{z}^{D} calculées pour les différentes distances de mesure et pour un même cycle de mesure peut être utilisé pour construire un signal de profil du vent selon la direction verticale dans un plan bâbord de l'aéronef. Ces deux signaux sont utiles à la détermination des moments de roulis que va subir l'aéronef.

Enfin, l'ensemble des composantes Wₜ^{B} calculées pour les différentes distances de mesure et pour un même cycle de mesure peut être utilisé pour construire un signal de profil du vent selon la direction transversale dans un plan horizontal de l'aéronef coupant son fuselage. Ce signal permet d'évaluer les risques de dérapage de l'aéronef.

Les autres composantes de vitesse calculées peuvent être utilisées de façon analogue pour établir d'autres signaux de profil du vent si nécessaire, ou pour affiner les précédents signaux dans certaines situations.

Les étapes 100 à 104 précédemment décrites fournissent un exemple de construction d'un ou de plusieurs signaux de profil du vent tels qu'utilisés par l'invention. D'autres procédés de construction sont possibles.

Selon l'invention, les moyens de traitement du dispositif d'atténuation sont adaptés pour traiter au moins un signal de profil du vent, et par exemple le signal de profil du vent W_{z}^{C}, de façon à en déterminer un contenu fréquentiel. En d'autres termes, le dispositif d'atténuation selon l'invention comprend des moyens de détermination de fréquences, aptes à traiter le signal de profil du vent W_{z}^{C} de façon à en déterminer un contenu fréquentiel.

Il est à noter que les traitements appliqués pour déterminer ce contenu fréquentiel dépendent des fréquences recherchées et donc de la direction d'excitation concernée, c'est-à-dire du signal de profil du vent analysé. La description qui suit concerne le signal W_{z}^{C} (direction d'excitation verticale, vent dans le plan médian de l'aéronef).

Ce signal de profil du vent W_{z}^{C} permet notamment de déceler si des phénomènes de tangage de l'aéronef (qui génèrent un grand inconfort pour les personnes) sont susceptibles de se produire. A cette fin, les moyens de traitement du dispositif d'atténuation sont adaptés pour rechercher si le signal de profil du vent W_{z}^{C} comporte au moins une fréquence proche de la fréquence d'oscillation d'incidence de l'aéronef. Une telle fréquence d'oscillation d'incidence est généralement de l'ordre de 0,3Hz. Pour pouvoir observer une telle fréquence, il convient de disposer d'un signal couvrant une période d'au moins 3,4s, et par exemple de l'ordre de 4s. C'est pourquoi d'une part on utilise de préférence un lidar dont la distance de visée maximale est de quelques 5s ou 1000m, et d'autre part on définit au moins quatre -et de préférence au moins huit- points de mesure sur la plage de distances [0 ; 5s] ou [0 ; 1000m] ou, pour les raisons expliquées ci-après, sur la plage de distances [1 s ; 5s] ou [200m ; 1000m]. Les phénomènes de tangage sont avantageusement contrés à l'aide d'une ou plusieurs surfaces mobiles de contrôle de la queue de l'aéronef. De telles surfaces mobiles ont un effet indirect sur les charges subies par le fuselage et les ailes de l'aéronef. Il est donc préférable de détecter les turbulences correspondantes le plus tôt possible, c'est-à-dire à grande distance du nez de l'aéronef. Par conséquent, on analyse de préférence la partie du signal de profil du vent correspondant à la plage de distances [1 s ; 5s] ou [200m ; 1000m]. En variante, on analyse la totalité du signal.

En pratique, les moyens de traitement traitent, à l'étape 106, la totalité du signal W_{z}^{C} ou la partie de signal susmentionnée de façon à déterminer si celui-ci ou celle-ci comporte des fréquences inférieures à 0,5Hz. Pour ce faire, ils comprennent par exemple un filtre passe-bas dont la fréquence de coupure est sensiblement égale à 0,5Hz.

Les moyens de traitement visent également à permettre de détecter la présence de turbulences susceptibles de mettre en péril la structure de l'aéronef, et en particulier ses ailes. A cette fin, ils sont avantageusement adaptés pour rechercher si le signal de profil du vent W_{z}^{C} comporte au moins une fréquence proche d'un mode propre (souple) d'oscillation en flexion des ailes de l'aéronef. Le premier mode propre en flexion (autour de la direction longitudinale) d'une aile d'un aéronef se situe en général entre 1,1Hz et 1,5Hz. Pour observer une telle fréquence, il suffit d'analyser le signal de profil du vent sur une période de 0,67s à 1 s. Par ailleurs, les effets d'une telle turbulence sont avantageusement contrés à l'aide d'une ou plusieurs surfaces mobiles de contrôle des ailes. De telles surfaces mobiles ont des vitesses de braquage relativement importantes et, surtout, un effet direct et immédiat sur les charges subies par les ailes. Il peut donc être prévu d'analyser le signal de profil du vent à proximité du nez de l'aéronef, zone où le signal obtenu est plus précis.

En pratique, les moyens de traitement traitent, à l'étape 106, de préférence la partie du signal de profil du vent W_{z}^{C} correspondant à la plage de distances [0 ; 1s] ou [0 ; 200m] de façon à déterminer si celle-ci comporte des fréquences supérieures à 1Hz. Pour ce faire, ils comprennent par exemple un filtre passe-haut dont la fréquence de coupure est sensiblement égale à 1Hz.

Il est à noter que les ailes de certains aéronefs présentent un mode propre en flexion compris entre 0,6 et 0,7Hz. Pour ces aéronefs, les moyens de traitement sont avantageusement adaptés pour traiter la partie du signal de profil du vent correspondant à la plage de distances [0 ; 2s] ou [0 ; 400m] de façon à déterminer si celle-ci comporte des fréquences supérieures à 0,5Hz. A cette fin, ils comprennent par exemple un filtre passe-haut dont la fréquence de coupure est sensiblement égale à 0,5Hz.

L'ensemble de ces traitements permet d'établir le contenu fréquentiel du signal de profil du vent W_{z}^{C}, qui peut maintenant, à l'étape 108, être utilisé par les moyens de traitement pour sélectionner une stratégie de contrôle à adopter. Un contenu fréquentiel comportant majoritairement des fréquences inférieures ou égales à 0,5Hz entraîne la sélection d'une stratégie de confort visant à réduire le tangage de l'aéronef et à améliorer ainsi le confort des personnes. Un contenu fréquentiel comportant majoritairement des fréquences supérieures à 0,5Hz ou à 1Hz entraîne la sélection d'une stratégie de préservation structurelle visant à préserver la structure (notamment la voilure) de l'aéronef. Un contenu fréquentiel comportant (en proportions sensiblement équivalentes) des fréquences inférieures à 0,5Hz et des fréquences supérieures à 0,5Hz ou à 1Hz entraîne la sélection d'une stratégie mixte visant à la fois à améliorer le confort des personnes et à préserver la voilure de l'aéronef.

A l'étape 110, les moyens de traitement identifient une ou un ensemble de lois de commande applicables, en fonction de la stratégie de contrôle précédemment sélectionnée. Comme précédemment expliqué, la stratégie de confort privilégie l'utilisation des surfaces mobiles de la queue de l'aéronef (gouvernes de profondeur, gouvernes de direction, élévateurs) ou éventuellement des spoilers et/ou flaperons des ailes. La stratégie de préservation structurelle privilégie l'utilisation des surfaces mobiles de contrôle des ailes de l'aéronef (ailerons, spoilers, volets, becs) ; elle n'exclut cependant pas de prévoir l'actionnement de surfaces de la queue de l'aéronef. La stratégie mixte peut conduire au recours de surfaces mobiles de contrôle situées sur la queue et sur les ailes de l'aéronef.

La loi de commande à appliquer est ensuite entièrement déterminée par les moyens de traitement (qui réalisent donc des moyens de détermination d'une loi de commande à appliquer), à l'étape 112. La loi de commande à appliquer est l'unique loi de commande applicable identifiée à l'étape 110 ou est choisie parmi l'ensemble des lois de commande applicables identifiées à cette étape 110. Dans le deuxième cas, la loi de commande à appliquer peut être choisie en fonction du contenu fréquentiel du signal de profil du vent et/ou en fonction d'une ou plusieurs amplitudes maximales de ce signal. A cette fin, l'étape 106 de traitement du signal comporte également de préférence un traitement permettant de déterminer l'amplitude maximale du signal de profil du vent sur chacune des parties de signal précédemment traitées à cette étape. Si la loi de commande répond à une stratégie de confort, l'amplitude maximale utilisée est l'amplitude maximale observée sur la totalité du signal de profil du vent ou sur la plage de distances [1s ; 5s] ou [200m ; 1000m]. Si la loi de commande répond à une stratégie de préservation structurelle, l'amplitude maximale utilisée est l'amplitude maximale observée sur la plage de distances [0 ; 1s] ou [0 ; 200m] ou sur la plage de distances [0 ; 2s] ou [0 ; 400m] (selon l'aéronef). Si la loi de commande répond à une stratégie mixte, l'amplitude maximale observée sur la plage de distances [0 ; 1s] ou [0 ; 200m], ou [0 ; 2s] ou [0 ; 400m], et l'amplitude maximale observée sur la totalité du signal de profil du vent ou sur la plage de distances [1 s ; 5s] ou [200m ; 1000m], sont de préférence toutes deux nécessaires pour choisir la loi de commande.

Chacune des lois de commande selon l'invention est préétablie en tenant compte de la vitesse de braquage maximale de chaque surface mobile de contrôle, du temps pouvant s'écouler entre le braquage de chaque surface mobile et les effets de ce braquage (réponse de l'aéronef, suite à l'actionnement de la surface mobile), et éventuellement du temps pouvant s'écouler entre la rencontre de chaque type de turbulence et les effets de cette turbulence (réponse de l'aéronef, suite à la rencontre d'une turbulence). Selon la surface mobile de contrôle à actionner et le type (fréquence, amplitude maximale... ) de la turbulence à venir, il peut être avantageusement d'anticiper ou de retarder l'actionnement de la surface mobile de contrôle par rapport à l'instant de rencontre de la turbulence, de façon à ce que la réponse de l'aéronef soit en phase avec les effets de la turbulence rencontrée. Chaque loi de commande définit ainsi la ou les surfaces mobiles à actionner, leurs vitesses de braquage et de contrebraquage, les instants de début de braquage et de début de contrebraquage, qui peuvent être déphasés par rapport à l'instant de rencontre d'une turbulence, et ce en fonction de l'amplitude courante du signal de profil du vent correspondant à une distance xᵣ ou à un instant tᵣ prédéfini dépendant de la surface mobile de contrôle.

A l'étape 114, les moyens de traitement mettent en oeuvre la loi de commande déterminée à l'étape précédente, en transmettant des ordres de commande correspondants aux surfaces mobiles de contrôle concernées.

Toutes les étapes du procédé selon l'invention sont bien entendu exécutées en temps réel. Le signal de profil du vent caractérise l'environnement atmosphérique de l'aéronef à un instant donné et est réactualisé en permanence au moins toutes les 60ms (durée d'un cycle de mesure). Les stratégies de contrôle à adopter et les lois de commande à appliquer sont actualisées selon la même fréquence.

L'invention peut faire l'objet de nombreuses variantes par rapport au mode de réalisation illustré, dès lors que ces variantes entrent dans le cadre délimité par les revendications.

Par exemple, les filtres passe-bas et passe-haut décrits peuvent être remplacés par des moyens de détermination de fréquences adaptés pour compter le nombre de passages du signal par la valeur zéro sur la partie de signal à traiter et pour en déduire une période moyenne puis une fréquence moyenne du signal sur cette partie. En variante, les moyens de détermination peuvent utiliser des relations, préétablies de façon empirique et statistique, entre l'amplitude maximale et l'écart type d'un signal de profil du vent d'une part, et entre l'écart type et la fréquence d'autre part, pour déterminer le contenu fréquentiel du signal de profil du vent.

En outre, les moyens de traitement peuvent également viser à détecter la présence de turbulences susceptibles de mettre en péril le fuselage de l'aéronef. Le premier mode propre en flexion (autour d'une direction transversale) du fuselage d'un aéronef se situe en général entre 2,5Hz et 3Hz. L'objectif est atteint par exemple à l'aide d'un filtre passe-haut dont la fréquence de coupure est sensiblement égale à 2,5Hz, appliqué à la partie du signal correspondant à la plage de distances [0 ; 1 s] ou [0 ; 200m], voire [0,5s ; 1 s] ou [100m ; 200m] ou en variante [0 ; 0,5s] ou [0 ; 100m].

## Revendications

1. Procédé d'atténuation des effets d'une turbulence sur un aéronef, **caractérisé en ce qu'**il comprend les étapes suivantes :
- on utilise au moins un signal (W_{z}^{C}), dit signal de profil du vent selon une direction dite direction d'excitation, représentant à un instant donné dans un référentiel aéronef la composante, selon ladite direction d'excitation, de la vitesse du vent à l'avant de l'aéronef en fonction de la distance "x" selon une direction longitudinale (L) de l'aéronef,
- on exécute une étape (106), dite étape de détermination de fréquences, dans laquelle on traite ce signal de profil du vent de façon à en déterminer un contenu fréquentiel,
- on sélectionne (108) une stratégie de contrôle à adopter en fonction du contenu fréquentiel précédemment déterminé, laquelle stratégie permet d'identifier une ou plusieurs lois de commande applicables.

2. Procédé selon la revendication 1, **caractérisé en ce qu'**on choisit (110, 112) une loi de commande à appliquer pour commander des surfaces mobiles de contrôle de l'aéronef, en fonction de la stratégie de contrôle précédemment sélectionnée et d'un ou de plusieurs maxima d'amplitude que présente le signal de profil du vent.

3. Procédé selon la revendication 2, **caractérisé en ce qu'**on détermine entièrement la loi de commande à appliquer en tenant compte du déphasage pouvant exister entre l'actionnement de chaque surface mobile de contrôle concernée par ladite loi de commande et la réponse correspondante de l'aéronef.

4. Procédé selon l'une des revendications 1 à 3, **caractérisé en ce que**, dans l'étape (106) de détermination de fréquences, on traite le signal de profil du vent de façon à déterminer si celui-ci ou une partie de celui-ci comporte au moins une fréquence comprise dans au moins une plage de fréquences prédéfinie.

5. Procédé selon la revendication 4, **caractérisé en ce qu'**on traite le signal de profil du vent de façon à déterminer si celui-ci ou une partie de celui-ci comporte au moins une fréquence proche d'un mode propre rigide de l'aéronef.

6. Procédé selon la revendication 5, **caractérisé en ce que** le signal traité est un signal (W_{z}^{C}) de profil du vent selon la direction verticale et **en ce qu'**on traite ledit signal de façon à déterminer si celui-ci ou une partie de celui-ci comporte au moins une fréquence proche de la fréquence d'oscillation d'incidence de l'aéronef.

7. Procédé selon la revendication 6, caractérisé qu'on traite ledit signal de profil du vent de façon à déterminer si celui-ci comporte au moins une fréquence inférieure à 0.5Hz.

8. Procédé selon l'une des revendications 4 à 7, **caractérisé en ce qu'**on traite le signal de profil du vent de façon à déterminer si celui-ci ou une partie de celui-ci comporte au moins une fréquence proche d'un mode propre souple de l'aéronef.

9. Procédé selon la revendication 8, **caractérisé en ce que** le signal traité est un signal (W_{z}^{C}) de profil du vent selon la direction verticale et **en ce que** ledit signal est traité de façon à déterminer si une partie de celui-ci correspondant à la plage de distances [0 ; 400m] ou [0 ; 2s] comporte au moins une fréquence supérieure à 0,5Hz, ou si une partie de celui-ci correspondant à la plage de distances [0 ; 200m] ou [0 ; 1s] comporte au moins une fréquence supérieure ou égale à 1Hz.

10. Procédé selon l'une des revendications 4 à 9, **caractérisé en ce que**, dans l'étape (108) de sélection de la stratégie de contrôle :
- si le contenu fréquentiel déterminé comporte majoritairement des fréquences proches d'un mode propre rigide de l'aéronef, on sélectionne une stratégie de contrôle, dite stratégie de confort, visant à améliorer le confort des personnes dans l'aéronef,
- si le contenu fréquentiel déterminé comporte majoritairement des fréquences proches d'un mode propre souple de l'aéronef, on sélectionne une stratégie de contrôle, dite stratégie de préservation structurelle, visant à préserver la structure de l'aéronef,
- si le contenu fréquentiel déterminé comporte à la fois des fréquences proches d'un mode propre rigide de l'aéronef et des fréquences proches d'un mode propre souple de celui-ci, en proportions sensiblement équivalentes, on sélectionne une stratégie de contrôle, dite stratégie mixte, visant à la fois à améliorer le confort des personnes et à préserver la structure de l'aéronef.

11. Procédé selon la revendication 10, **caractérisé en ce que** :
- la sélection de la stratégie de confort conduit à l'application de lois de commande commandant l'activation de surfaces mobiles de contrôle choisies parmi : gouvernes de profondeur, gouvernes de direction, élévateurs, flaperons, spoilers, ailerons ;
- la sélection de la stratégie de préservation structurelle conduit de préférence à l'application de lois de commande commandant l'activation de surfaces mobiles de contrôle choisies parmi : ailerons, spoilers, volets, becs, gouvernes de profondeur, gouvernes de direction.

12. Dispositif d'atténuation des effets d'une turbulence sur un aéronef, **caractérisé en ce qu'**il comprend :
- des moyens de détermination de fréquences, adaptés pour traiter un signal (W_{z}^{C}), dit signal de profil du vent selon une direction dite direction d'excitation, de façon à en déterminer un contenu fréquentiel, lequel signal représente à un instant donné dans le référentiel aéronef la composante, selon ladite direction d'excitation, de la vitesse du vent à l'avant de l'aéronef en fonction de la distance "x" selon une direction longitudinale (L) de l'aéronef,
- des moyens de sélection d'une stratégie de contrôle à adopter en fonction du contenu fréquentiel précédemment déterminé, laquelle stratégie permet d'identifier une ou plusieurs lois de commande applicables.

13. Dispositif selon la revendication 12, **caractérisé en ce qu'**il comprend des moyens de détermination d'une loi de commande à appliquer pour commander des surfaces mobiles de contrôle de l'aéronef, aptes à déterminer entièrement ladite loi de commande en tenant compte du déphasage pouvant exister entre l'actionnement de chaque surface mobile de contrôle concernée et la réponse correspondante de l'aéronef.

14. Aéronef **caractérisé en ce qu'**il comprend un dispositif d'atténuation des effets d'une turbulence sur l'aéronef selon la revendication 12 ou la revendication 13.

## Claims

1. A method for attenuating effects of turbulence on an aircraft, **characterized in that** it comprises the following steps:
- using at least one signal (W_{z}^{C}), referred to as wind profile signal in a direction referred to as excitation direction, representing, at a given time in an aircraft frame of reference, the component, in the said excitation direction, of the wind speed ahead of the aircraft according to the distance "x" in a longitudinal direction (L) of the aircraft,
- executing a step (106), referred to as frequency determination step, in which this wind profile signal is processed so as to determine a frequency content thereof,
- selecting (108) a control strategy to be adopted according to the previously determined frequency content, which strategy makes it possible to identify one or more applicable control rules.

2. A method according to claim 1, **characterized in that** a control rule to be applied to operate movable control surfaces of the aircraft is chosen (110, 112) according to the previously selected control strategy and one or more amplitude maxima presented by the wind profile signal.

3. A method according to claim 2, **characterized in that** the control rule to be applied is determined in its entirety by taking into account the phase difference that may exist between actuation of each movable control surface affected by the said control rule and the corresponding response of the aircraft.

4. A method according to one of claims 1 to 3, **characterized in that**, in the frequency-determination step (106), the wind profile signal is processed so as to determine if it or part thereof contains at least one frequency included in at least one predefined frequency range.

5. A method according to claim 4, **characterized in that** the wind profile signal is processed so as to determine if it or part thereof contains at least one frequency close to a rigid natural mode of the aircraft.

6. A method according to claim 5, **characterized in that** the processed signal is a wind profile signal (W_{z}^{C}) in the vertical direction and **in that** the said signal is processed so as to determine if it or part thereof contains at least one frequency close to the incidence oscillation frequency of the aircraft.

7. A method according to claim 6, **characterized in that** the said wind profile signal is processed so as to determine if it contains at least one frequency lower than 0.5 Hz.

8. A method according to one of claims 4 to 7, **characterized in that** the wind profile signal is processed so as to determine if it or part thereof contains at least one frequency close to a flexible natural mode of the aircraft.

9. A method according to claim 8, **characterized in that** the processed signal is a wind profile signal (W_{z}^{C}) in the vertical direction, and **in that** the said signal is processed so as to determine if a part thereof corresponding to the distance range [0; 400 m] or [0; 2 s] contains at least one frequency above 0.5 Hz, or if a part thereof corresponding to the distance range [0; 200 m] or [0; 1 s] contains at least one frequency higher than or equal to 1 Hz.

10. A method according to one of claims 4 to 9, **characterized in that**, in the step (108) of selecting the control strategy:
- if the determined frequency content is composed mainly of frequencies close to a rigid natural mode of the aircraft, a control strategy referred to as comfort strategy is selected, intended to improve the comfort of the persons in the aircraft,
- if the determined frequency content is composed mainly of frequencies close to a flexible natural mode of the aircraft, a control strategy referred to as structural preservation strategy is selected, intended to preserve the structure of the aircraft,
- if the determined frequency content is composed both of frequencies close to a rigid natural mode of the aircraft and of frequencies close to a flexible natural mode thereof, in substantially equivalent proportions, a control strategy referred to as mixed strategy is selected, intended to improve both the comfort of persons and to preserve the structure of the aircraft.

11. A method according to claim 10, **characterized in that**:
- the selection of the comfort strategy leads to the application of control rules that bring about activation of movable control surfaces chosen from among: elevators, rudders, elevons, flaperons, spoilers, ailerons;
- the selection of the structural preservation strategy preferably leads to the application of control rules that bring about activation of movable control surfaces chosen from among: ailerons, spoilers, flaps, slats, elevators, rudders.

12. A device for attenuating the effects of turbulence on an aircraft, **characterized in that** it comprises:
- frequency-determining means, capable of processing a signal (W_{z}^{C}), referred to as wind profile signal in a direction referred to as excitation direction, so as to determine its frequency content, which signal represents, at a given time in the aircraft frame of reference, the component, in the said excitation direction, of the wind speed ahead of the aircraft according to the distance "x" in a longitudinal direction (L) of the aircraft,
- means for selecting a control strategy to be adopted according to the previously determined frequency content, which strategy makes it possible to identify one or more applicable control rules.

13. A device according to claim 12, **characterized in that** it comprises means for determining a control rule to be applied to operate movable control surfaces of the aircraft, capable of determining the said control rule in its entirety by taking into account the phase difference that may exist between the actuation of each movable control surface in question and the corresponding response of the aircraft.

14. An aircraft, **characterized in that** it comprises a device for attenuating the effects of turbulence on the aircraft according to claim 12 or claim 13.

## Patentansprüche

1. Verfahren zur Dämpfung der Wirkungen einer Turbulenz auf ein Luftfahrzeug, **dadurch gekennzeichnet, dass** es die folgenden Schritte umfasst, dass:
- wenigstens ein Signal (W_{z}^{C}), Windprofilsignal genannt, in einer Richtung, Erregungsrichtung genannt, verwender wird, das zu einem gegebenen Zeitpunkt in einem Luftfahrzeug-Bezugssystem die Komponente in der Erregungsrichtung der Windgeschwindigkeit vorn an Luftfahrzeug in Abhängigkeit von der Entfernung "x" in einer Längsrichtung (L) des Luftfahrzeugs darstellt,
- ein Schritt (106), Frequenzbestimmungsschritt genannt, durchgeführt wird, bei dem dieses Windprofilsignal verarbeitet wird, um hieraus einen Frequenzgehalt zu bestimmen,
- in Abhängigkeit von dem zuvor bestimmten Frequenzgehalt eine zu übernehmende Kontrollstrategie ausgewählt wird (108), welche Strategie ermöglicht, ein oder mehrere anwendbare Steuerungsgesetze zu ermitteln.

2. Verfahren nach Anspruch 1, **dadurch gekennzeichnet, dass** ein zur Steuerung von beweglichen Kontrollflächen des Luftfahrzeugs anzuwendendes Steuerungsgesetz in Abhängigkeit von der zuvor ausgewählten Kontrollstrategie und von einem oder mehreren Amplitudenmaxima, die das Windprofilsignal aufweist, ausgewählt wird (110, 112).

3. Verfahren nach Anspruch 2, **dadurch gekennzeichnet, dass** das anzuwendende Steuerungsgesetz vollständig unter Berücksichtigung der Phasenverschiebung, die zwischen der Betätigung einer jeden von dem Steuerungsgesetz betroffenen beweglichen Kontrollfläche und der entsprechenden Reaktion des Luftfahrzeugs vorhanden sein kann, bestimmt wird,

4. Verfahren nach einem der Ansprüche 1 bis 3, **dadurch gekennzeichnet, dass** bei dem Frequenzbestimmungsschritt (106) das Windprofilsignal verarbeitet wird, um zu bestimmen, ob dieses oder ein Teil dessen wenigstens eine Frequenz umfasst, die in wenigstens einem vordefinierten Frequenzbereich liegt.

5. Verfahren nach Anspruch 4. **dadurch gekennzeichnet, dass** das Windprofilsignal verarbeitet wird, zum zu bestimmen, ob dieses oder ein Teil dessen wenigstens eine Frequenz nahe einer starren Eigenschwingungmode des Luftfahrzeugs umfasst.

6. Verfahren nach Anspruch 5, **dadurch gekennzeichnet, dass** das verarbeitete Signal ein Windprofilsignal (W_{z}^{C}) in vertikaler Richtung ist und dass das Signal verarbeitet wird, um zu bestimmen, ob dieses oder ein Teil dessen wenigstens eine Frequenz nahe der Anstellwinkelschwingungsfrequenz des Luftfahrzeugs umfasst.

7. Verfahren nach Anspruch 6, **dadurch gekennzeichnet, dass** das Windprofilsignal verarbeitet wird, um zu bestimmen, ob dieses wenigstens eine Frequenz von unter 0,5 Hz umfasst

8. Verfahren nach einem der Ansprüche 4 bis 7, dadurch gekennzeichet, dass das Windprofilsignal verarbeitet wird, um zu bestimmten, ob dieses oder ein Teil dessen wenigstens eine Frequenz nahe einer flexiblen Eigenschwingungsmode des Luftfahrzeugs umfasst.

9. Verfahren nach Anspruch 8, **dadurch gekennzeichnet, dass** das verarbeitete Signal ein Windprofilsignal (W_{z}^{C}) in vertikaler Richtung ist und dass das Signal verarbeitet wird, um zu bestimmen, ob ein Teil dessen, der dem Entfernungsbereich [0; 400m] oder [0; 2s] entspricht, wenigstens eine Frequenz von über 0,5 Hz umfasst oder ob ein Teil dessen, der dem Entfemungsbereich [0; 200m] oder [0; 1s] entspricht, wenigstens eine Frequenz von über oder gleich 1 Hz umfasst.

10. Verfahren nach einem der Ansprüche 4 bis 9, **dadurch gekennzeichnet, dass** bei dem Schritt (108) zur Auswahl der Kontrollstrategie:
wenn der bestimmte Frequenzgehalt mehrheitlich Frequenzen nahe einer starren Eigenschwingungsmode des Luftfahrzeugs umfasst, eine Kontrollstrategie, Komfortstrategie genannt, ausgewählt wird, die darauf abzielt, den Komfort der Personen in dem Luftfahrzeug zu verbessern,
- wenn der bestimmte kY-equenzgehalt mehrheitlich Frequenzen nahe einer flexiblen Eigenschwtngungsmode des Luftfahrzeugs umfasst, eine Kontrollstrategie, Strukturerhaltungsstrategie genannt, ausgewählt wird, die darauf abzielt, die Struktur des Luftfahrzeugs zu erholten
- wenn der bestimmte Frequenzgehalt sowohl Frequenzen nahe einer starren Eigenschwingungsmode des Luftfahrzeugs als auch Frequenzen nahe einer flexiblen Eigenschwingung dessen, in im Wesentlichen gleichwertigen Anteilen umfasst, eine Kontrollstrategie, gemischte Strategie genannt, ausgewählt wird, die darauf abzielt, sowohl den Komfort der Personen zu verbessern als auch die Struktur des Luftfahrzeugs zu erhalten.

11. Verfahren nach Anspruch 10, **dadurch gekennzeichnet, dass**:
- die Auswahl der Komfortstrategie zur Anwendung von Steuerungsgesetzen führt, die die Aktivierung von beweglichen Kontrollflächen, welche aus Höhenrudern, Seitenrudern, Elevators, Flaperons. Spoilern, Querrudern ausgewählt sind, steuern,
- die Auswahl der Strukturerhaltungastrategie vorzugsweise zur Anwendung von Steuerungsgesetzen führt, die die Aktivierung von beweglichen Kontrollflächen, welche aus Querrudern, Spoilern, Klappen, Slats. Höhenrudern. Seitenrudern ausgewählt sind steuern.

12. Vorrichtung zur Dämpfung der Wirkungen einer Turbulenz an einem Luftfahrzeug, **dadurch gekennzeichnet, dass** sie umfasst:
- Mittel zur Frequenzbestimmung, die dazu ausgelegt sind, ein Signal (Wz^{C}), Windprofilsignal genannt, in einer Richtung, Erregungrichtung genannt, zu verarbeiten, um hieraus einen Frequenzgehalt zu bestimmen, welches Signal zu einem gegebenen Zeitpubkt in dem Luftfahrzeug-Bezugssystem die Komponente in der Erregungsrichtung der Windgeschwindigkeit vom am Luftfahrzeug un Abhängigkeit der Entfernung "x" in einer Längsrichtung (L) des Luftfahrzeugs darstellt,
- Mittel zum Auswählen einer zu übernehmenden Konta-ollstrategie in Abhängigkeit des zuvor bestimmten Frequenzgehaltes, welche Strategie ermöglicht, ein oder mehrere anwendbare Steuerungsgesetze zu ermitteln.

13. Vorrichtung nach Anspruch 12, **dadurch gekennzeichnet, dass** sie Mittel zur Bestimmung eines zur Steuerung von beweglichen Kontrollflächen des Luftfahrzeugs anzuwendenden Steuerungsgesetzes umfasst, die geeignet sind, das Steuerungsgesetz vollständig unter Berücksichtigung der Phasenverschiebung, die zwischen der Betätigung einer jeden betroffenen beweglichen Kontrollfläche und der entsprechenden Reaktion des Luftfahrzeugs vorhanden sein kann, zubestimmen.

14. Luftfahrzeug, **dadurch gekennzeichnet, dass** es eine Vorrichtung zur Dämpfung der Wirkungen einer Turbulenz an dem Luftfahrzeug nach Anspruch 12 oder Anspruch 13 umfasst.
